# EUROPEAN PATENT SPECIFICATION

(11) **EP 2 268 004 B1**
(45) Date of publication and mention of the grant of the patent: **28.11.2018**
(21) Application number: 10275050.2
(22) Date of filing: 04.05.2010
(51) Int. Cl.: H04N 5/44, H04N 21/426, H04N 21/4385

(54) **Broadcast receiver and method**
Rundfunkempfänger und Verfahren
Récepteur de diffusion et procédé

(30) Priority: 03.06.2009 GB 0909586
(43) Date of publication of application: 29.12.2010
(73) Proprietor: Saturn Licensing LLC, New York, NY (US)
(72) Inventor: Taylor, Matthew Paul Athol, Southampton, Hampshire BH24 1JQ (GB); Whittaker, Jason, Newbury, RG20 5PN (GB); Waller, Arthur Simon, Surrey, KT15 1UE (GB); Fakhruddin, Muzaffar, Surrey, KT13 9TL (GB)
(74) Representative: D Young & Co LLP

(56) References cited:
- US-B1- 7 334 132
- DVB PROJECT: "Frame structure channel coding and modulation for a second generation digital terrestrial television broadcasting system (DVB-T2)", INTERNET CITATION, June 2008 (2008-06), pages 1-158, XP002546005, Retrieved from the Internet: URL:http://www.dvb.org/technology/dvbt2/a1 22.tm3980r5.DVB-T2.pdf [retrieved on 2009-09-15]
- ANDERSON R E ET AL: "Design of an MPEG-2 transport demultiplexor core", IBM JOURNAL OF RESEARCH AND DEVELOPMENT, INTERNATIONAL BUSINESS MACHINES CORPORATION, NEW YORK, NY, US, 1 July 1999 (1999-07-01), pages 521-532, XP002278633, ISSN: 0018-8646

## Description

### Field of the Invention

The present invention relates to a broadcast receiver and method for obtaining a selected data stream from a broadcast signal carrying a plurality of data streams. In some embodiments the broadcast receiver may be a television receiver.

### Background of the Invention

The DVB (Digital Video Broadcasting) collaboration developed the DVB-T (Digital Video Broadcasting - Terrestrial) standard as a transmission standard for digital terrestrial television. Following the development of DVB-T a new enhanced standard based on DVB-T has been developed called DVB-T2. Like DVB-T, DVB-T2 uses OFDM (orthogonal frequency division multiplex) modulation comprising a large number of sub-carriers transmitted on a symbol-by-symbol basis. However, DVB-T2 includes a number of features which are not included in the DVB-T standard. These include the use of time-interleaved physical layer pipes (PLPs) within the broadcast signal which carry respective data streams each representing one or more services. These physical layer pipes may be considered as channels which are transparent to the method of network delivery, and which in the case of DVB-T2 are Time-Division-Multiplex (TDM) channels carried by specified sub-slices. In DVB-C2 the physical layer pipes are Frequency Division Multiplex channels. Physical layer pipes may also feature as channels in other network delivery schemes, including for example DVB-S2.

The physical layer pipes provided for by the DVB-T2 standard include data physical layer pipes which carry at least a portion of a respective data stream, and common physical layer pipes which carry a common portion of two or more data streams. Where data is common to two or more data streams, respective data physical layer pipes carry the non-common portions of the data streams, and a common physical layer pipe carries the common portion. In order to demodulate a data stream which is carried partly on a data physical layer pipe and partly on a common physical layer pipe, it is necessary to extract both the data physical layer pipe and the common physical layer pipe from the broadcast signal.

Digital TVs commonly employ an architecture in which an input signal from a receiving antenna first passes through an RF (radio-frequency) tuner, and is then demodulated by demodulator circuitry. The demodulated signal is then passed to host circuitry, which decompresses and decodes the signal for output. The demodulated signal may then be passed between the demodulator circuitry and the host circuitry in the form of an MPEG (Motion Pictures Expert Group) transport stream. The MPEG transport stream may then be decompressed and decoded by the host circuitry. The host circuit contains a CPU (Central Processing Unit) which runs host software, the functions of which include controlling the demodulator circuitry to demodulate a selected data stream, and control of the decompression and decoding process of the MPEG transport stream.

The DVB T2 standard as presented in a document "Frame Structure, Channel coding and modulation for a Second Generation Digital Terrestrial Television Broadcasting system (DVB-T2)" published in June 2008, known as the DVB blue book A122, TM 3980 revision 5, discloses in Annex D from page 122 to 128 an arrangement for spitting MPEG-2 transport streams into data PLPs and a common PLP of a group of PLP's. The document discloses a requirement to recover at a receiver the data for a transport stream which has been transmitted as a data PLP and a common PLP, where data which is common to more than one data PLP is transmitted. As set out in the Annex D, there is a requirement to rebuild the data from a transport stream by identifying data which is common and transmitted in the common PLP to rebuild the data stream from the data from the data PLP. This is achieved using a service description table and rebuilding and event information table which identifies transport stream packets which includes Packet Identifiers (PIDs).

In documents entitled "Design of an MPEG-2 Transport Demultiplexor Core" by R. E. Anderson and E. M. Foster published in the IBM Journal of Research and Development, New York, NY, US, 1 July 1999 pages 521 to 532, there is disclosed a receiver architecture which includes an MPEG-2 transport de-multiplexer to support a host processor for common tasks such as clock recovery, table section filtering and an interface for a processor to modify the handling of incoming transport streams.

US 7,334,132 discloses an arrangement for a receiver in which data is recovered from a transport stream using a transport processor comprising a front end and a memory interface. The front-end receives concurrently a plurality of transport streams where two or more the transport streams can have different formats, and each transport stream includes a plurality of packets. The front end includes a packet processor to create an aggregate transport stream in a single format from the plurality of transport streams. The memory interface provides an arrangement for the transport processor to store an aggregate transport stream in a memory for use by a decoder for regenerating video images for display.

### Summary of Invention

According to a first aspect of the present invention there is provided a broadcast receiver, comprising demodulator circuitry, host circuitry and an interface formed between the demodulator circuitry and the host circuitry, the demodulator circuitry being arranged in operation
to determine, from the stored association between the data physical layer pipes and the common physical layer pipes, a common physical layer pipe associated with the selected data physical layer pipe;
to extract, from the broadcast signal, the selected data physical layer pipe and the determined associated common physical layer pipe; and
to combine the extracted data physical layer pipe and common physical layer pipe to obtain the desired one of the plurality of data streams for output to the host circuitry for decompression and decoding.

By handling the common physical layer pipes at the demodulation circuitry rather than at the host circuitry, the amount of data crossing the interface between the demodulator circuitry and the host circuitry can be reduced. This reduces the level of electrical noise that may be generated by the physical interface, which will in turn reduce interference with the sensitive electronic circuitry in the RF (radio frequency) tuner module and demodulator circuitry thus reducing performance degradation of the broadcast receiver. Furthermore, the reduction in the amount of data crossing the interface uses less of the limited bandwidth of the physical interface.

The demodulator need not be concerned with the content of each physical layer pipe (provided that it is able to demodulate it), and merely needs to know which data physical layer pipe to demodulate, and which common physical layer pipe (if any) it should demodulate. The information regarding which data physical layer pipe is required to be demodulated is provided by the host circuitry in the form of an identification of the required data physical layer pipe, and the information regarding which common physical layer pipe (if any) is required to be demodulated in associated with the required data physical layer pipe is stored at the demodulator. The stored association between data physical layer pipes and common physical layer pipes need not be provided to the host circuitry, thus reducing the amount of information transmitted via the interface.

The host circuitry may comprise a service store which stores an association between available services and the data PLP identifiers of data physical layer pipes carrying those available services, the host circuitry being responsive to a user input selecting one of the services stored in the service store to communicate an identification of the data physical layer pipe associated with the selected service to the demodulator circuit via the interface. The demodulator is then operable to obtain a
data stream corresponding to the selected service by determining a common physical layer pipe associated with the data physical layer pipe identified by the host circuitry, extracting the identified data physical layer pipe and the determined associated common physical layer pipe, and combining the extracted data physical layer pipe and common physical layer pipe to for the data stream corresponding to the selected service. Providing this association between services and data physical layer pipes enables users of the broadcast receiver to be provided with a list of services, which may include various television channels and/or an electronic program guide, and are able to select, from that list, a service to be provided by the broadcast receiver. Based on the selected service, the host circuitry is able to determine the data physical layer pipe which provides the selected service, and use the respective data PLP identifier to control the demodulation of the requested physical layer pipe and service.

The broadcast signal may comprise control signalling identifying each of the data physical layer pipes and the common physical layer pipes and indicating an association between the data physical layer pipes and the common physical layer pipes. In this case, the demodulator circuitry comprises identification extraction circuitry which is operable to extract, from the control signalling of the broadcast signal, a data PLP identifier for each of the data physical layer pipes, a common PLP identifier for each of the common physical layer pipes, and an association between the data PLP identifiers and the common PLP identifiers, to store the extracted association between the data PLP identifiers and the common PLP identifiers to the data store, and to communicate the extracted data PLP identifiers to the host circuitry via the interface. The host circuitry is then operable to communicate the data PLP identifier corresponding to the selected data physical layer pipe to the demodulator circuitry. Then, the demodulator circuitry is operable, if the selected data physical layer pipe has an associated common physical layer pipe, to determine the common PLP identifier of the associated common physical layer pipe from the stored association between the data PLP identifiers and a common PLP identifiers, and to extract the selected data physical layer pipe and the associated common physical layer pipe based on their respective PLP identifiers. By utilising physical layer pipe identifiers already present in the control signalling of the broadcast signal, physical layer pipes and the associations between them can be reliably determined.

The association between the data physical layer pipes and the common physical layer pipes may be indicated in the control signalling using a group identifier. In this case, the data store may comprise:
a group identifier table storing the association between each data PLP identifier and a group identifier; and
a common PLP table storing an association between each group identifier and, in the case that the group of physical layer pipes represented by the group identifier comprises a common physical layer pipe, the common PLP identifier of the common physical layer pipe.

The data extraction circuitry is then responsive to the selection signal to obtain the group identifier corresponding to the selected data physical layer pipe by referring to the group identifier table, and to determine whether there is a common physical layer pipe corresponding to the selected data physical layer pipe by referring to the common PLP table, and if so to obtain the common PLP identifier of the common physical layer pipe from the common PLP table.

This simple table structure can be populated by the demodulator circuitry as the control signalling in the broadcast signal is received and parsed, and can then be used to determine, as a function of the selection signal (which itself specifies the data PLP identifier for the selected data physical layer pipe) whether a common physical layer pipe belonging to the same logical group as the selected data physical layer pipe exists, and if so to determine its common PLP identifier.

The interface may comprise an address map having a set of memory locations each having a unique address. In this case, the host circuitry is operable to control the communication of data from the demodulator to the host circuitry via the interface by reading from a memory location within the address map, and is operable to control the communication of data from the host circuit to the demodulator circuit by writing to a memory location within the address map. In an alternative arrangement the address map could be provided in the host circuitry rather than the demodulator. In this way, an efficient application programming interface for providing a control path between the host circuitry and the demodulator circuitry can be provided.

The address map may comprise:
a first memory location storing a number of data physical layer pipes carried by the broadcast signal, the first memory location being readable by the host circuitry;
a second memory location storing a data PLP index for obtaining a data physical layer pipe identifier, the second memory location being writeable by the host circuitry;
a third memory location storing the data PLP identifier corresponding to the data PLP index written into the second memory location by the host circuitry, the third memory location being readable by the host circuitry; and
a fourth memory location storing the data PLP identifier of the data physical layer pipe selected by the host circuitry, the fourth memory location being writeable by the host circuitry.

This address map configuration provides a simplified application programming interface between the demodulator circuitry and the host circuitry, and consequently also permits the simplification of the control software running on the host circuitry.

The data store may comprise a data PLP table storing an association between sequential data PLP indices and data PLP identifiers. In this case, the identification extraction circuitry is operable to sequentially populate the data PLP table with the data PLP identifiers indicated by the control signalling to be present in the broadcast signal as the broadcast signal is received and parsed. Then, the host circuitry is operable to obtain an indication of the number N of received data physical layer pipes by reading the first memory location of the address map, and to obtain the data PLP identifiers stored in the data PLP table by sequentially writing N data PLP indices to the second memory location of the address map and reading the resultant N data PLP identifiers from the third memory location.

The demodulator circuitry may comprise payload discrimination circuitry operable to detect a payload type of each of the data physical layer pipes and to determine whether the detected payload type is supported by the demodulator circuitry. In this case, the identification extraction circuitry is operable to communicate an extracted identification of a data physical layer pipe only if that data physical layer pipe is determined by the payload discrimination circuitry as having a payload type supported by the demodulator circuitry. By selectively communicating only compatible data physical layer pipes to the host circuitry, the amount of data being communicated via the interface can be reduced, and a channel scan process of generating a list of received data channels at the demodulator circuitry and the host circuitry can be conducted more quickly.

The extraction circuitry may be operable in the absence of a selection signal to extract a default data physical layer pipe and any associated common physical layer pipe from the broadcast signal and to obtain from the extracted default data physical layer pipe and the associated extracted common physical layer pipe a data stream corresponding to the default data physical layer pipe. The provision of a default data physical layer pipe enables the broadcast receiver to start demodulating the broadcast signal to obtain a data stream without waiting for an input from the user.

In addition to controlling the demodulation circuitry, the host circuitry may comprise decompression and/or decoding circuitry for decompressing and/or decoding the data stream output by the demodulator circuitry. The host circuitry may also provide additional functions relating to the processing and outputting of the resultant data stream.

The data streams carried by the broadcast signal may comprise one or more of a video transport stream, an audio transport stream and an electronic program guide.

The broadcast signal may be in accordance with the DVB-T2 standard, and in this case the physical layer pipes will be time interleaved within the broadcast signal.

The scope of protection of the present patent specification is as defined by the appended claims. Any embodiment not falling within such scope should be regarded as a mere example.

### Brief Description of the Drawings

Embodiments of the present invention will now be described by way of example only with reference to the accompanying drawings where like parts are provided with corresponding reference numerals and in which:
Figure 1 schematically illustrates a typical DVB-T2 transmitter chain;
Figure 2 schematically illustrates a typical DVB-T2 frame structure;
Figure 3 schematically illustrates a typical DVB-T2 receiver chain;
Figure 4 schematically illustrates a typical DVB-T2 superframe structure;
Figure 5 schematically illustrates the interleaving of data streams to form the payload portions of a broadcast signal;
Figure 6 schematically illustrates a television receiver according to an embodiment of the present invention;
Figure 7 schematically illustrated a memory map according to an embodiment of the present invention;
Figure 8 schematically illustrates a data physical layer pipe identifier table;
Figure 9 schematically illustrates a data physical layer pipe identifier to group identifier association table;
Figure 10 schematically illustrates a group identifier to common PLP association table; and

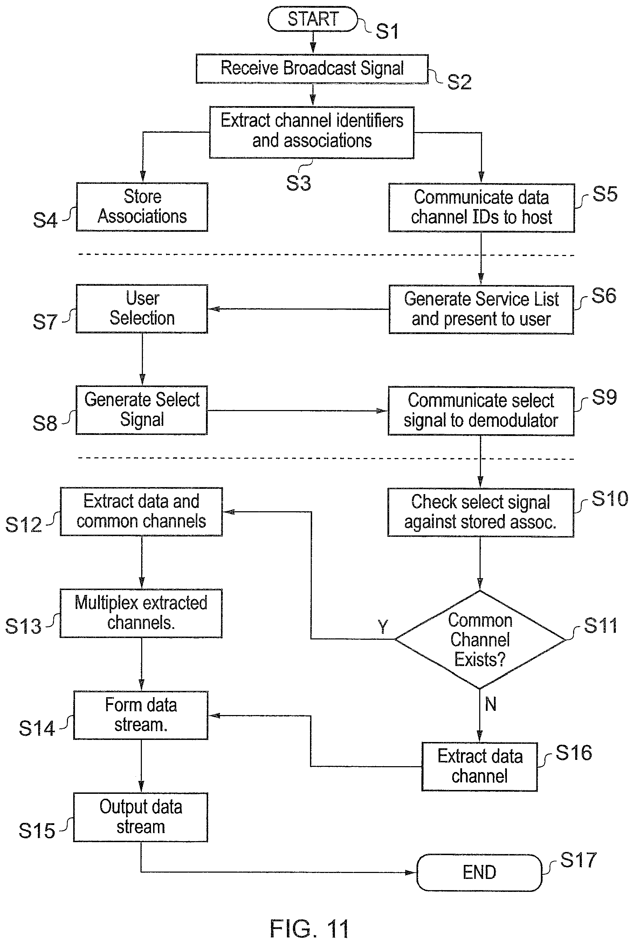

Figure 11 is a schematic flow diagram illustrating a broadcast receiving method according to an embodiment of the present invention.

### Description of Example Embodiments

### Transmitter

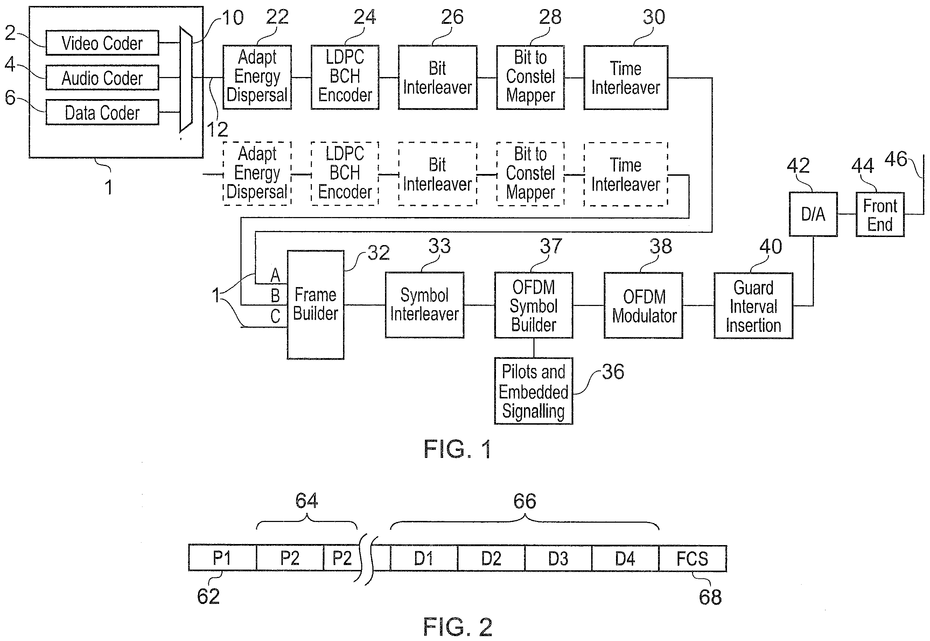

Figure 1 provides an example block diagram of an OFDM transmitter which may be used for example to transmit video images and audio signals in accordance with the DVB-T2 standard. In Figure 1 a program source 1 generates data to be transmitted by the OFDM transmitter. A video coder 2, an audio coder 4 and a data coder 6 generate video, audio and other data respectively to be transmitted which are fed to a program multiplexer 10. The output of the program multiplexer 10 forms a multiplexed stream with other information required to communicate the video, audio and other data. The multiplexer 10 provides a stream on a connecting channel 12. There may be many such multiplexed streams which are fed into different branches A, B, C etc. For simplicity, only branch A will be described with reference to Figure 1, but it will be appreciated that the other branches will have an identical, or similar, structure.

As shown in Figure 1, an OFDM transmitter receives the stream at a multiplexer adaptation and energy dispersal block 22. The multiplexer adaptation and energy dispersal block 22 randomises the data and feeds the appropriate data to a forward error correction encoder 24 which performs error correction encoding of the stream. A bit interleaver 26 is provided to interleave the encoded data bits which for the example of DVB-T2 is the LDCP/BCH encoder output. The output from the bit interleaver 26 is fed to a bit into constellation mapper 28, which maps groups of bits onto a constellation point of a modulation scheme, which is to be used for conveying the encoded data bits. The outputs from the bit into constellation mapper 28 are constellation point labels that represent real and imaginary components. The constellation point labels represent data symbols formed from two or more bits depending on the modulation scheme used. These can be referred to as data cells. These data cells are passed through a time-interleaver 30 whose effect is to interleave data cells resulting from multiple LDPC code words.

The data cells are received by a frame builder 32, with data cells produced by branch B and C in Figure 1, via other channels 31. The data cells of each of branches A, B and C will be carried by respective physical layer pipes as will be described in detail below. The frame builder 32 then forms the received data cells into sequences to be conveyed on OFDM symbols, where an OFDM symbol comprises a number of data cells, each data cell being mapped onto one of the sub-carriers. The number of sub-carriers will depend on the mode of operation of the system, which may include one of 1k, 2k, 4k, 8k, 16k or 32k , each of which provides a different number of sub-carriers according, for example to the following table:

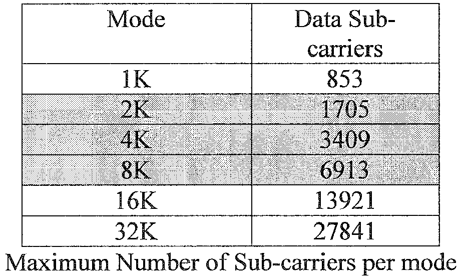

The sequence of data cells to be carried in each OFDM symbol is then passed to the symbol interleaver 33. An OFDM symbol is then generated by an OFDM symbol builder block 37 which introduces pilot and synchronising signals fed from a pilot and embedded signal former 36. An OFDM modulator 38 then forms the OFDM symbol in the time domain which is fed to a guard insertion processor 40 for generating a guard interval between symbols, and then to a digital to analogue converter 42 and finally to an RF amplifier within an RF front end 44 for eventual broadcast by the COFDM transmitter from an antenna 46.

For the DVB-T2 system, the number of sub-carriers per OFDM symbol can vary depending upon the number of pilot and other reserved carriers. An example illustration of a frame according to the DVB-T2 standard is shown in Figure 2. In DVB-T2, unlike in DVB-T, the number of sub-carriers for carrying data is not fixed. Broadcasters can select one of the operating modes from 1k, 2k, 4k, 8k, 16k, 32k each providing a range of sub-carriers for data per OFDM symbol, the maximum available for each of these modes being 1024, 2048, 4096, 8192, 16384, 32768 respectively. In DVB-T2 a physical layer frame is composed of many OFDM symbols. Typically the frame starts with a preamble or P1 symbol as shown in Figure 2, which provides signalling information relating to the configuration of the DVB-T2 deployment, including an indication of the mode. The P1 symbol is followed by one or more P2 OFDM symbols 64, which are then followed by a number of payload carrying OFDM data (D1, D2, D3, D4) symbols 66. The end of the physical layer frame is marked by a frame closing symbols (FCS) 68. The DVB-T2 frame structure is discussed in more depth below. For each operating mode, the number of sub-carriers may be different for each type of symbol. Furthermore, the number of sub-carriers may vary for each according to whether bandwidth extension is selected, whether tone reservation is enabled and according to which pilot sub-carrier pattern has been selected.

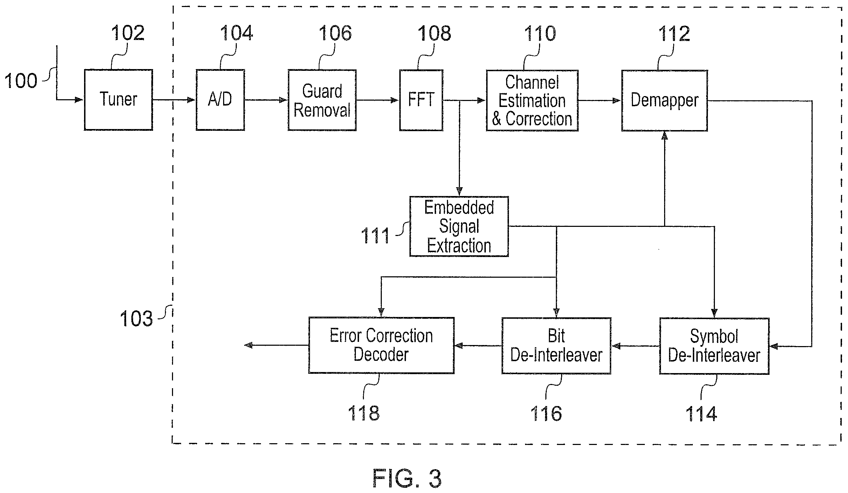

Figure 3 provides an example illustration of a receiver which may be used to handle an OFDM signal as described above. As shown in Figure 3, an OFDM signal is received by an antenna 100, detected by a tuner 102 and converted into digital form by an analogue-to-digital converter 104. A guard interval removal processor 106 removes the guard interval from a received OFDM symbol, before the data is recovered from the OFDM symbol using a Fast Fourier Transform (FFT) processor 108 in combination with a channel estimator and corrector 110 and an embedded-signalling decoding unit 111. The demodulated data is recovered from a de-mapper 112 and fed to a symbol de-interleaver 114, which operates to affect a reverse mapping of the received data symbol to re-generate an output data stream with the data de-interleaved. This serves to separate the data cells of the physical layer pipes carrying the outputs of respective branches A, B and C of Figure 1 as described above. Similarly, the bit de-interleaver 116 reverses the bit interleaving performed by the bit interleaver 26. The remaining parts of the OFDM receiver shown in Figure 3 are provided to effect error correction decoding 118 to correct errors and recover an estimate of the source data. The analogue-to-digital converter 104, guard interval removal processor 106, Fast Fourier Transform (FFT) processor 108, channel estimator and corrector 110, embedded-signalling decoding unit 111, de-mapper 112, symbol de-interleaver 114, bit de-interleaver 116 and error correction decoder 118 each form part of a demodulator 103.

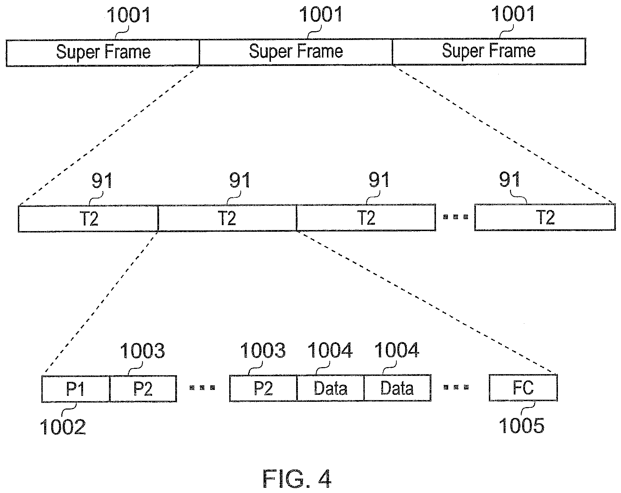

Figure 4 provides a schematic illustration of a DVB-T2 frame structure. As can be seen, the frame structure consists of a sequence of super frames 1001, each super frame 1001 in turn consisting of a number of T2 frames 91. The T2 frames each comprise a number of OFDM symbols. Each T2 frame begins with a P1 signalling symbol 1002, which is followed by at least one P2 signalling symbol 1003 and then a sequence of data symbols 1004 which terminates in a frame closing symbol 1005. In DVB-T2, frames are independent of each other and may be of variable length.

The ETSI DVB-T2 standard introduces the concept of physical layer pipes (PLPs). A signal conforming to the DVB-T2 standard comprises one or more physical layer pipes for carrying data streams in a time-interleaved manner. If more than one data stream is to be transmitted on the broadcast signal, it is likely that some data will be common to multiple data streams. Accordingly, if each of those data streams were to be transported on a respective physical layer pipe, the data will be repeated in more than one physical layer pipe. This is a waste of capacity, and thus the DVB-T2 standard provides a mechanism to alleviate this problem. Specifically, data that is common to more than one data stream can be conveyed by a separate common physical layer pipe. In this situation, the common data can be extracted from the original data streams prior to transmission and conveyed by a common physical layer pipe and a set of data physical layer pipes (which carry the non-common data). In the receiver in this situation, the data conveyed by a common physical layer pipe can be multiplexed with the data conveyed by one of the data physical layer pipes to reconstruct one of the original data streams.

The DVB-T2 standard allows a DVB-T2 signal to consist of any integer number of physical layer pipes between 1 and 255. Any physical layer pipe can be a common physical layer pipe or a data physical layer pipe. As a result of the fact that a common physical layer pipe carries data from one or more original data streams, there will be fewer common physical layer pipes than data physical layer pipes in a DVB-T2 signal. Thus, each data physical layer pipe in the signal may be associated with a common physical layer pipe; there may be zero or more common physical layer pipes; some data physical layer pipes may have no common physical layer pipe.

A receiver is able to select one of the data physical layer pipes and then determine the associated common physical layer pipe (if one exists) in order to reconstruct the original data stream. Each physical layer pipe can convey one of 32 payload types, one of which is an MPEG transport stream.

The DVB-T2 signal also conveys some signalling to enable the receiver to handle the physical layer pipes. In particular, each physical layer pipe has an identifier specified within the signal (in a PLP_ID field) which is unique within the DVB-T2 signal. The signalling also conveys the total number of common and data physical layer pipes in the signal (in a NUM_PLP field); whether each physical layer pipe is a common physical layer pipe or a data physical layer pipe (in PLP TYPE fields); the payload type (in PAYLOAD_TYPE fields) and the group ID (in GROUP_ID fields). Associated common and data physical layer pipes will have the same group ID. Therefore, in the set of signalled data, there will be one NUM_PLP field, and one PLP_ID, PLP_TYPE, PAYLOAD_TYPE and GROUP_ID field for each PLP.

Further details of the DVB-T2 standard can be found in the "Implementation guidelines for a second generation digital terrestrial television broadcasting system (DVB-T2)" - DVB Bluebook A133.

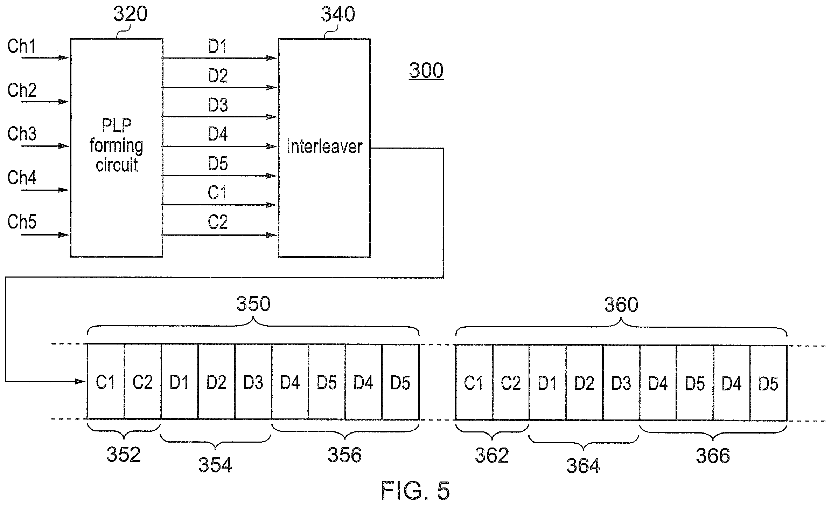

Figure 5 schematically illustrates a transmitting arrangement 300 in which a plurality of channels Ch1, Ch2, Ch3, Ch 4 and Ch5 are formed into DVB-T2 payloads for insertion into T2 frames. The transmitting arrangement 300 of Figure 5 may approximately correspond to the frame builder 32 illustrated in Figure 1. The arrangement comprises a physical layer pipe forming circuit 320 for generating a plurality of physical layer pipes for carrying the inputted channels Ch1, Ch2, Ch3, Ch 4 and Ch5. The physical layer pipes generated in this case include data physical layer pipes D1, D2, D3, D4 and D5, which carry at least portions of the inputted channels Ch1, Ch2, Ch3, Ch 4 and Ch5 respectively, and common physical layer pipes C1 and C2 which each carry a portion of two or more of the inputted channels Ch1, Ch2, Ch3, Ch 4 and Ch5. More particularly, the physical layer pipe forming circuit 320 analyses the content of each of the channels Ch1, Ch2, Ch3, Ch 4 and Ch5 to determine if two or more of the channels share common data. If so, the physical layer pipe forming circuit generates a common physical layer pipe to carry the common data, and generates respective data physical layer pipes corresponding to each of the channels sharing the common data, the data physical layer pipes carrying the data of those channels which is not common. In this way, the data physical layer pipes carry less data. As a result, duplication of data on the broadcast signal is reduced, resulting in lower bandwidth requirements.

In the present example two common physical layer pipes C1 and C2 have been generated. The first common physical layer pipe C1 may for example carry data common to each of channels Ch1 and Ch2. The second common physical layer pipe C2 may for example carry data common to each of channels Ch4 and Ch5. The channel Ch3 might not include data common to another channel and might therefore be carried wholly within the data physical layer pipe D3. In this case, each of data physical layer pipes D1 and D2 will be associated with the common channel C1, and each of data physical layer pipes D4 and D5 will be associated with the common channel C2. Data physical layer pipe D3 will not be associated with a common physical layer pipe.

The transmitting arrangement 300 further comprises a physical layer pipe interleaver 340 which time interleaves the physical layer pipes D1 to D5, C1 and C2 to form DVB-T2 frame payloads. These payloads will be represented for example by the data symbols 1004 of Figure 4. An example interleaved structure generated by the physical layer pipe interleaver is illustrated at the bottom portion of Figure 5. In accordance with the DVB-T2 standard, common physical layer pipes are provided before the data physical layer pipes, and are in the present case provided in interleaved form in the payload portion 352 of a first DVB-T2 frame payload 350 and in the payload portion 362 of a second DVB-T2 frame payload 360. Following the common physical layer pipes, a Type 1 payload portion 354 is provided in the frame payload 350 in which a set of data physical layer pipes D1, D2 and D3 are interleaved once within the frame payload 350. Similarly the data physical layer pipes D1, D2 and D3 are interleaved once within the Type 1 payload portion 364 of the frame payload 360. Following the Type 1 data physical layer pipes, a Type 2 payload portion 356 is provided in the frame payload 350 in which a set of data physical layer pipes D4 and D5 are interleaved multiple times within the frame payload 350. As can be seen from Figure 5, each of the data physical layer pipes D4 and D5 are interleaved (repeated) twice within the Type 2 payload portion 356 of the frame payload 350. Similarly the data physical layer pipes D4 and D5 are interleaved twice within the Type 2 payload portions 366 of the frame payload 360. In this way, different channels can be carried on physical layer pipes specifically configured to handle the services provided by those channels.

### Receiver

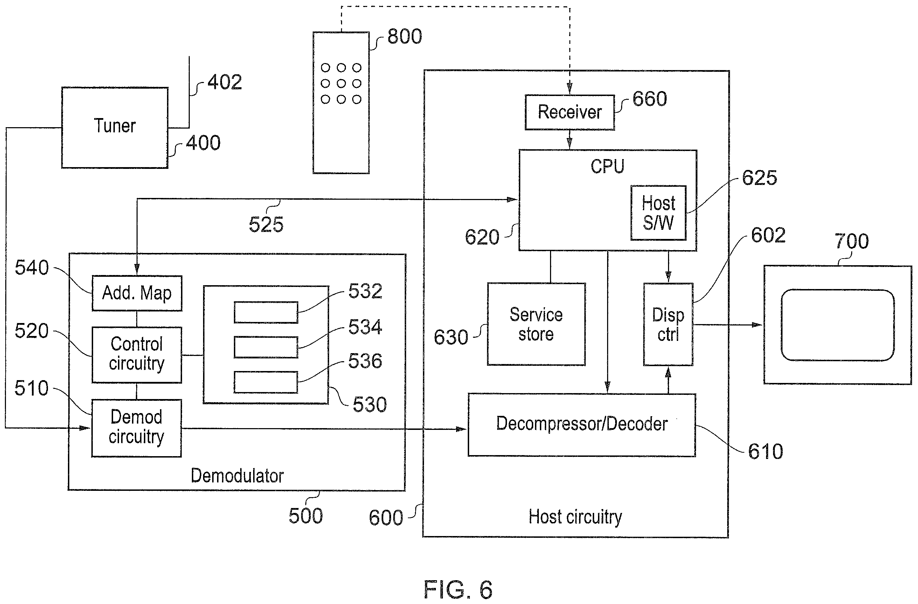

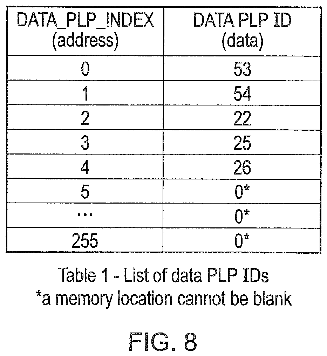

In Figure 6, an example television receiver is schematically illustrated which comprises a tuner 400, a demodulator 500 and host circuitry 600. The tuner 400 of Figure 6 may be considered to correspond to the tuner 102 of Figure 3, and the demodulator 500 of Figure 6 may be considered to correspond approximately to the demodulator 103 of Figure 3. The television receiver is shown to be connected to a display device 700 and an input device 800, in this case a television remote control. The tuner 400 serves to tune an antenna 402 to a particular frequency band of the radio-frequency spectrum upon which a desired television signal is broadcast, and to output the received broadcast signal to the demodulator 500. The demodulator 500 comprises demodulation circuitry 510 which carries out the functions specified in the demodulator 103 shown in Figure 3, and also comprises control circuitry 520 for controlling the operation of the demodulation circuitry 510 in response to control signals received from the host circuitry via a physical interface line 525 and an address map 540 which together implement an application programming interface for providing a control path between the host circuitry 600 and the demodulator 500. The demodulator 500 also comprises a PLP association storage area 530 storing a first table 532, a second table 534 and a third table 536. These tables are used by the control circuitry 520 in combination with the control signals received from the host circuitry 600 via the physical interface line 525 and address map 540 to identify the physical layer pipes within the broadcast signal which should be extracted to form a demodulated signal. The operation of these tables will be described in detail below with reference to Figures 8 to 10.

The host circuitry 600 provides controlling, decoding and outputting functions in respect of the broadcast signal. In particular, the host circuitry 600 comprises a decompressor/decoder 610 for decompressing and/or decoding the demodulated signal output from the demodulator 500. The decompressor/decoder 610 is controlled by a central processing unit 620 upon which host software 625 is executing. The output of the decompressor/decoder 610 is provided via a display controller 602 to the display device 700. The host circuitry 600 can be controlled by a user via the input device 800 which is wirelessly connected to the host circuitry via wireless receiver 660. The host circuitry 600 also comprises a service store 630 for storing a list of services available on the broadcast signal in association with the physical layer pipes (channels) carrying those services. The host software 625 running on the central processing unit 620 of the host circuitry 600 controls the operation of the demodulator 500 via an application programming interface between the host software 625 and the control circuitry 520 of the demodulator 500. The application programming interface is provided using the physical interface line 525 between the central processing unit 620 of the host circuitry 600 and the address map 540 of the demodulator 500, and the address map 540 itself.

In order for the host software 625 to control the demodulator 500, the application programming interface between the demodulator 500 and the host software 625 is defined to satisfy the control requirements. In the present example, the application programming interface is implemented using an address map 540, which is a set of memory locations (in the present example provided in the demodulator 500) each having a unique address. Each of the memory locations can be read from by the host software, and some of the memory locations can be written to by the host software. Information can be transferred from the demodulator 500 to the host software 625 running on the host circuitry 600 by reading from a memory location in the address map 540, whereas information can be transferred from the host software 625 to the demodulator 500 by writing to a memory location in the address map 540.

It will be appreciated that the application programming interface between the host software 625 and the demodulator 500 is implemented in part by the physical interface 525 between the host circuitry 600 and the demodulator 500. This interface has a limited bandwidth and the more data which is passed across it, the more electrical noise is likely to be generated. This electrical noise may interfere with the sensitive electronic circuitry in the tuner circuitry and demodulator 500, in turn degrading the performance of the television receiver.

### Channel Scanning

In order to be able to present a list of available services to the TV user, the receiver, and in particular the host circuitry 600 will build up a database of available services in the service store 630. This database associates data physical layer pipe identifiers with services. Each data physical layer pipe identifier may be associated with one or more services. Embodiments of the present invention avoid the requirement for the database in the service store to store the common physical layer pipe identifiers associated with each data physical layer pipe identifiers in the case that there are common physical layer pipes present in the DVB-T2 signal. The process of building up this service list is sometimes referred to as channel scanning. The list of services is output to the display device 700 via the display controller 602.

### Channel zapping

Once the TV user has been presented with a list of available services on the display device 700 following the channel scanning process, he may wish to select one of the available services via the input device 800. The receiver will then determine the associated data physical layer pipe identifier from the database in the service store 630 and also, in a manner described below, whether there is an associated common physical layer pipe and if so, the common physical layer pipe identifier. Once the physical layer pipe identifiers have been determined, the receiver can multiplex the data conveyed by the selected data physical layer pipe with the data conveyed by the associated common physical layer pipe in order to reconstruct one of the original data streams and, thus, give the TV user access to the desired service. This process is sometimes called channel zapping.

The channel scanning and channel zapping functionality may be implemented partly by the host software and partly by the demodulator circuitry. One way of partitioning this functionality would be for the demodulator circuitry to make all of the signalling transmitted within the DVB-T2 signal available to the host software via the application programming interface and, during the channel scan process, for the host software to build up a database of available services which associates services with data physical layer pipe identifiers, with whether there is an associated common physical layer pipe and, if so, with the common physical layer pipe identifier. Then, when the TV user wishes to select a service, the host software will then determine the associated data physical layer pipe identifier from the database in the service store and also whether there is an associated common physical layer pipe and, if so, its identifier. Once the physical layer pipe identifiers have been determined, the host software could write the physical layer pipe identifiers across the application programming interface to the demodulator 500 to enable it to multiplex the data conveyed by the selected data physical layer pipe with the data conveyed by the associated common physical layer pipe in order to reconstruct the original data stream and, thus, give the TV user access to the desired service.

A disadvantage of this mode of operation is that the amount of data communicated between the demodulator 500 and the host circuitry 600 would be relatively large, thus wasting bandwidth and generating undesirable amounts of electrical noise in the physical interface.

An improved way of partitioning the functionality between the demodulator 500 and the host circuitry 600 is for the demodulator 500 to make the number of data physical layer pipes transmitted within the DVB-T2 signal - N_{dataPLPs} - and a list of the data physical layer pipes available to the host software via the application programming interface and, during the channel scan process, for the host software to build up a database of available services which associates services with the data physical layer pipe identifiers. Then, during both the channel scan and channel zap processes, the demodulator would build up a database which associates each data physical layer pipe identifier with whether there is an associated common physical layer pipe and, if so, with the respective common physical layer pipe identifier. Then, when the TV user wishes to select a service, the host software will determine the associated data physical layer pipe identifier from its database and will then write this across the application programming interface to the demodulator. The demodulator will then multiplex the data conveyed by the selected data physical layer pipe with the data conveyed by the associated common physical layer pipe in order to reconstruct the original data stream and, thus, give the TV user access to the desired service.

In some cases a DVB-T2 demodulator circuit may only be capable of processing physical layer pipes which convey a subset of payload types. For example, one likely implementation might be a DVB-T2 demodulator that is only capable of processing physical layer pipes which convey MPEG transport streams. In this case, the demodulator would ignore data physical layer pipes which do not convey unsupported payload types and so the number of data physical layer pipes to be transferred across the application programming interface to the host software would in fact be the number of data physical layer pipes which convey supported payload types. This would advantageously reduce the bandwidth requirements of the physical interface and reduce the time taken to conduct channel scanning.

In some embodiments, rather than wait for the host software to select a data physical layer pipe, the demodulator circuitry selects one by default. For example, the demodulator circuitry could select the first data physical layer pipe it discovers and the corresponding common physical layer pipe if a common physical layer pipe is associated with the default data physical layer pipe.

### Address Map Implementation

A section of an example address map which could implement the application programming interface is:
- R: NUM_DATA_PLPS
- RW: DATA_PLP_INDEX
- R: READ_PLP_ID
- RW: PLP_SELECT

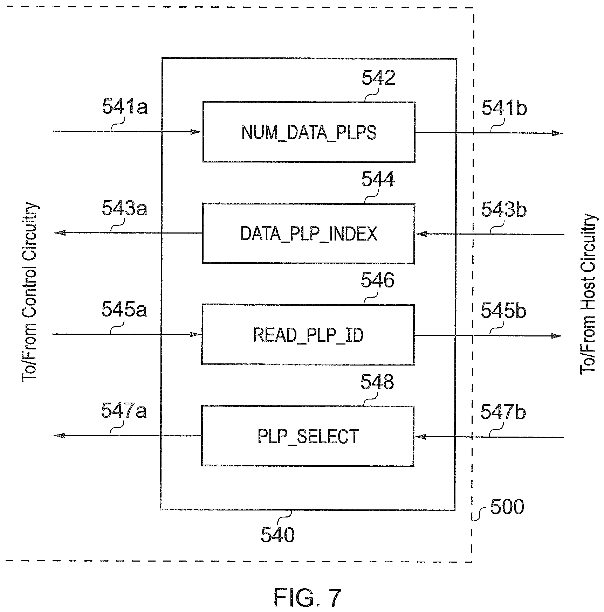

This address map is schematically illustrated in Figure 7. In particular, referring to Figure 7, the address map 540 shown in Figure 6 is illustrated in more detail. As with Figure 6, the address map 540 is provided within the demodulator 500 and serves as part of the interface between the control circuitry 520 of the demodulator 500 and the host software 625 running on the host circuitry 600. As can be seen in Figure 7, a first memory location 542 stores a value NUM_DATA_PLPS which indicates the number of data physical layer pipes present in a currently received broadcast signal. The value NUM_DATA_PLPS is obtained by the demodulator from the signalling portion of the broadcast signal and is then written into the first memory location. The symbol "R" above indicates that the first memory location is readable by the host circuitry 600. This is also apparent from Figure 7, which includes directional arrows 541a and 541b indicating that data is written to the first memory location 542 by the control circuitry 520 and read from the first memory location by the host circuitry 600.

The address map also comprises a second memory location 544 which stores a value DATA_PLP_INDEX which can be specified by the host circuitry 600 in a process of acquiring data physical layer pipe identifiers, as will be described below. The symbol "RW" indicates that the first memory location can be written to by the host circuitry 600. This is also apparent from Figure 7, which includes directional arrows 543a and 543b indicating that data is written to the second memory location 544 by the host circuitry 600 and read from the second memory location by the control circuitry 520.

The address map also comprises a third memory location 546 which stores a value READ PLP_ID which is populated by the demodulator 500 with a data PLP identifier read from a table using the DATA_PLP_INDEX specified in the second memory location by the host circuitry 600. The third memory location 546 is readable by the host circuitry 600 to acquire the data physical layer pipe identifiers extracted from the broadcast signal. As with the first memory location 542, the symbol "R" indicates that the third memory location 546 is readable by the host circuitry 600, but cannot be written to by the host circuitry 600. This is also apparent from Figure 7, which includes directional arrows 545a and 545b indicating that data is written to the third memory location 546 by the control circuitry 520 and read from the third memory location 546 the host circuitry 600.

Finally, the address map comprises a fourth memory location 548 which stores a value PLP SELECT which is populated by the host circuitry 600 with a data PLP identifier selected by the host circuitry 600 for demodulation. The fourth memory location can be written to by the host circuitry 600, as is apparent from Figure 7, which includes directional arrows 547a and 547b indicating that data is written to the fourth memory location 548 by the host circuitry 600 and read from the fourth memory location 548 by the control circuitry 520.

### Address Map Operation During Channel Scan

During channel scan, the host software reads the number of data physical layer pipes from NUM_DATA_PLPS via the first memory location in the address map. Then, the host circuitry writes an index value between 0 and NUM_DATA_PLPS - 1 to DATA_PLP_INDEX via the second memory location in the address map. Then, the host circuitry reads the corresponding data physical layer pipe identifier from READ_PLP_ID via the third memory location in the address map. In this way, by holding at the demodulator a list of available data physical layer pipe identifiers indexed by sequential values from 0 to NUM_DATA_PLPS - 1, the list can be efficiently transferred by the present technique. In the C programming language, the relevant portion of the host software might resemble:

| | |
|---|---|
| int PLP_IDTable[256]; | (1) |
| int PLPindex; | (2) |
| int numPLP_ IDs; | (3) |
| | |
| // read the number of data PLPs, then... | |
| numPLP_IDs = APIread(NUM_DATA_PLPS); | (4) |
| | |
| //...build up a table of data PLP IDs | |
| For (PLPindex=0; PLPindex<numPLP_IDs; ++PLPindex) { | (5) |
| APIwrite (DATA PLP INDEX, PLPindex); | (6) |
| PLP_IDtable[PLPindex]=APIread(READ_PLP_ID); | (7) |
| } | |

Line 1 of the above program code declares a 256 cell integer array to store received data physical layer pipes received from the demodulator via the application programming interface. Lines 2 and 3 declare the variables PLPindex and numPLP_IDs. Line 4 obtains the number of data physical layer pipes from the first memory location of the address map using the APIread command. Lines 5 to 7 set up a loop to sequentially apply an index value of between 0 and numPLP_IDs - 1 to the second memory location of the memory map in the demodulator 500 using an APIwrite command and read the corresponding data physical layer pipe identifier from the third memory location using the APIread command. In this way, the host software is able to build up a list of data physical layer pipes from the indexed list stored at the demodulator 500. This list is then associated with services at the host circuitry 600 to form the service database stored in the service store 630.

### Address Map Operation During Channel Zap

During channel zap, the host software writes one the data physical layer pipe identifier corresponding to a selected one of the data physical layer pipes from its service database to the fourth memory location location 548 to specify the PLP_SELECT value, which is then referred to by the control circuitry 520 of the demodulator 500 to select the physical layer pipes which are to be demodulated.

### PLP Association

The broadcast signalling described above will be received sequentially. The first field received in the control signalling is the number of PLPs - NUM PLP. Then, amongst other fields the PLP_ID, PLP_TYPE and GROUP_ID fields are received in turn for each PLP. During the process of parsing the DVB-T2 signalling, the hardware builds up three tables:
The first table (Table 1) is a table of data physical layer pipe identifiers. This table is used in the process of transferring the list of available data physical layer pipe identifiers across the application programming interface to the host software in the manner described above. An example of the first table is schematically illustrated in Figure 8. During the process of parsing the DVB-T2 signalling, this table is filled sequentially from address 0 and records the data physical layer pipe identifiers in the order in which they are received, resulting in N_{dataPLPs} rows being filled. This table is addressed by the DATA_PLP_INDEX API memory location (in the range 0 to N_{dataPLPLs} - 1), which indexes the left hand column of Figure 8, and the output of the first table (the right hand column of Figure 8) drives the READ_PLP_ID API memory location, so that the host software can read the data physical layer pipe identifier addressed by that location. In the example shown in Figure 8, five data physical layer pipes have been identified from the control signalling, and have been determined to have the physical layer pipe identifiers 53, 54, 22, 25 and 26 respectively.

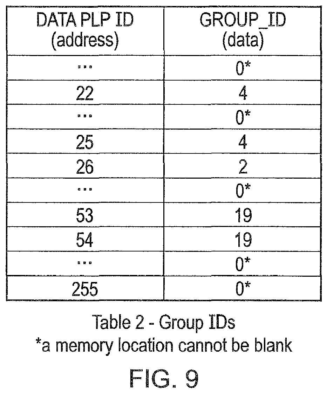

The second table (Table 2) is a table holding received physical layer pipe identifiers and the associated group identifier for each. An example of the second table is schematically illustrated in Figure 9. During the process of parsing the DVB-T2 signalling, this table is addressed by data physical layer pipe identifier, and the group identifier of each data physical layer pipe is written to the row corresponding to that data physical layer pipe identifier. Then, during the channel zap process, the table is addressed by the PLP_SELECT API memory location so that when the host software writes a data physical layer pipe identifier to the PLP_SELECT API memory location, this table outputs the corresponding group identifier. In the example shown in Figure 9, the five data physical layer pipes identified in Table 1 have been determined, from the control signalling, to have group identifiers 4 (for PLP_ID = 22 and 25), 2 (for PLP_ID = 26) and 19 (for PLP ID = 53 and 54).

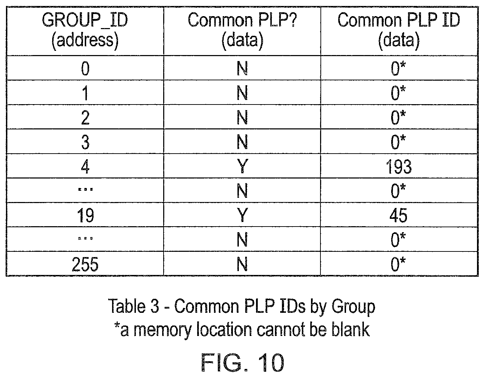

The third table (Table 3), an example of which is schematically illustrated in Figure 10, is addressed by the group identifier (GROUP_ID) output of the second table, and records whether a common physical layer pipe exists for each group, and if so what the common physical layer pipe identifier of that common physical layer pipe is. During the process of parsing the DVB-T2 signalling, when a common physical layer pipe is discovered, this fact and the physical layer pipe identifier of that common physical layer pipe are recorded in the row corresponding to the group identifier of that common physical layer pipe. Then, during the channel zap process, the table is addressed by the output (GROUP_ID) of the second table so that when the host software writes a data physical layer pipe identifier to the fourth memory location (PLPSELECT), the third table outputs a flag to signal whether a common physical layer pipe exists which relates to the selected data physical layer pipe, and if so, the corresponding common physical layer pipe identifier. In the example of Figure 10, it can be seen that only group identifiers 4 and 19 have a positive flag indicating the existence of a common physical layer pipe relating to that group identifier. In this case, group identifier 4 has associated with it a common physical layer pipe having an identifier 193. Similarly, group identifier 19 has associated with it a common physical layer pipe having an identifier 45.

The value of the fourth (SELECT_PLP) API memory location and the output of the third table give a data physical layer pipe identifier and a flag to signal whether a common physical layer pipe exists for that data physical layer pipe, and if so, the corresponding common physical layer pipe identifier. The data physical layer pipe identifier and (if present) the common physical layer pipe identifier are then used by the demodulation circuitry 510 of the demodulator 500 to demodulate the service selected by the user.

In the case that the demodulator is only able to process certain payload types, the hardware would parse the DVB-T2 signalling PAYLOAD_TYPE fields and would ignore any physical layer pipe that conveys an unsupported payload type.

In the case that the demodulator 500 is set to select a default physical layer pipe in the absence of a selection by the user, then by convention, the data physical layer pipe identifier specified in the first row of the first table could be designated as being the default location, which would output a default physical layer pipe identifier. The mechanism of the second and third tables would then generate a flag to signal whether a common physical layer pipe exists for that data physical layer pipe, and if so, the corresponding physical layer pipe identifier. It will be appreciated that other default physical layer pipe selection schemes could be used, such as selecting a most recently watched channel, or selecting from a default channel list specified by the user.

### Summary of Operation

The schematic flow diagram illustrated in Figure 10 provides a summary of operation of the above embodiment.

The process starts at a step S1, which may be initiated for example when the television receiver is first switched on. At a step S2, the broadcast signal is received via an aerial and tuner unit and provided to a demodulator. At the demodulator, the broadcast signal is parsed, and control signalling provided within the broadcast signal is processed to extract PLP identifiers and associations between the physical layer pipes at a step S3. The identifiers may be those provided within the PLP ID fields of a DVB-T2 signal, and the associations may be provided by the GROUP_ID fields of a DVB-T2 signal. At a step S4, the associations are stored within the demodulator, and a list of the data PLP identifiers extracted from the broadcast signal by the demodulator are communicated to host circuitry at a step S5.

The host circuitry is able to build up a list of available services for presentation to a user at a step S6, and the user is able to make a selection from amongst these services at a step S7. The host circuitry then generates a selection signal at a step S8 in dependence on the data PLP identifier which corresponds to the selected service, and then communicates the selection signal to the demodulator at a step S9.

At a step S10, the demodulator checks the selection signal against the association between data physical layer pipes and common physical layer pipes stored at the step S4. At a step S11 it is determined, based on the stored association, whether a common physical layer pipe exists which corresponds to the selected data physical layer pipe. If a common physical layer pipe is determined to exist, then at a step S12 the demodulator extracts from the broadcast signal both the data physical layer pipe and the associated common physical layer pipe. Then, at a step S13, the extracted data and common physical layer pipes are multiplexed together. The multiplexed physical layer pipes are then formed into a data stream at the step S14 and output (either for direct output or decompression/decoding) at a step S15. If at the step S11 it is determined that no common physical layer pipe exists which corresponds to the selected data physical layer pipe, then at a step S16 the selected data physical layer pipe is extracted from the broadcast signal by the demodulator, and is then formed into a data stream and output at the steps S14 and S15 respectively. The process terminates at a step S17.

Various modifications may be made to the embodiments herein before described. It will be appreciated that aspects of the invention may be implemented in the form of a computer program product comprising processor executable instructions stored on a data carrier such as a floppy disk, optical disk, hard disk, PROM, RAM, flash memory or any combination of these or other storage media, or transmitted via data signals on a network such as an Ethernet, a wireless network, the Internet, or any combination of these of other networks, or realised in hardware as an ASIC (application specific integrated circuit) or an FPGA (field programmable gate array) or other configurable or bespoke circuit suitable to use in adapting the conventional equivalent device.

Embodiments of the present invention may also find application with other appropriate transmission standards such as the cable transmission standard known as DVB-C2. For the example of DVB-C2, it will be appreciated that the OFDM symbols are not transmitted and received via a radio frequency carrier, but via cable and so an appropriate adaptation of the transmitter and receiver architecture can be made. However, it will be appreciated that the present invention is not limited to application with DVB and may be extended to other standards for transmission or reception, both fixed and mobile.

## Claims

1. A broadcast receiver, comprising demodulator circuitry (500, 103), host (600) circuitry and an interface (525) formed between the demodulator circuitry (500, 103) and the host circuitry (600),
the demodulator circuitry (500, 103) being arranged in operation
to receive a broadcast signal carrying a plurality of data streams on a respective plurality of data physical layer pipes and one or more common physical layer pipes, each of the data physical layer pipes carrying at least a unique portion of a corresponding one of the data streams, and the one or more common physical layer pipes carrying a common portion of two or more of the plurality of data streams;
to identify each of the data physical layer pipes and the one or more common physical layer pipes present in the broadcast signal and to determine an association between the one or more common physical layer pipes and the data physical layer pipes;
to store the determined association between the common physical layer pipes and the data physical layer pipes in a data store (530); and
to communicate an identification of each of the data physical layer pipes present in the broadcast signal to the host circuitry via the interface (525); the host circuitry (600) being arranged in operation to communicate, to the demodulator circuitry (500, 103) via the interface, an identification of a selected data physical layer pipe which carries one of the plurality of data streams, wherein the demodulator circuitry (500, 103) is arranged in operation
to determine, from the stored association between the data physical layer pipes and the one or more common physical layer pipes, a common physical layer pipe associated with the selected data physical layer pipe;
to extract, from the broadcast signal, the selected data physical layer pipe and the determined associated common physical layer pipe; and
to combine the extracted data physical layer pipe and common physical layer pipe to obtain the one of the plurality of data streams for output to the host circuitry (600) for decompression and decoding.

2. A broadcast receiver according to claim 1, wherein the host circuitry (600) comprises a service store (630) which stores an association between available services and data physical layer pipes carrying those available services, the host circuitry (600) being responsive to a user input selecting one of the services stored in the service store to communicate an identification of the data physical layer pipe associated with the selected service to the demodulator circuit (500, 103) via the interface (525), and the demodulator circuit (500, 103) is operable to obtain a data stream corresponding to the selected service by determining a common physical layer pipe associated with the data physical layer pipe identified by the host circuitry, extracting the identified data physical layer pipe and the determined associated common physical layer pipe, and combining the extracted data physical layer pipe and common physical layer pipe to for the data stream corresponding to the selected service.

3. A broadcast receiver according to claim 1 or claim 2, wherein
the broadcast signal comprises control signalling identifying each of the data physical layer pipes and the one or more common physical layer pipes and indicating an association between the data physical layer pipes and the one or more common physical layer pipes;
the demodulator circuitry (500, 103) comprises identification extraction circuitry, operable
to extract, from the control signalling of the broadcast signal, a data PLP identifier for each of the data physical layer pipes, a common PLP identifier for each of the one or more common physical layer pipes, and an association between the data PLP identifiers and the common PLP identifiers;
to store the extracted association between the data PLP identifiers and the common PLP identifiers to a data store (530); and
to communicate the extracted data PLP identifiers to the host circuitry (600) via the interface (525);
the host circuitry (600) is operable to communicate the data PLP identifier corresponding to the selected data physical layer pipe to the demodulator circuitry; and
the demodulator circuitry (500, 103) is operable, if the selected data physical layer pipe has an associated common physical layer pipe, to determine the common PLP identifier of the associated common physical layer pipe from the stored association between the data PLP identifiers and the common PLP identifiers, and to extract the selected data physical layer pipe and the associated common physical layer pipe based on their respective PLP identifiers.

4. A broadcast receiver according to claim 3, wherein the association between the data physical layer pipes and the one or more common physical layer pipes is indicated in the control signalling by a group identifier, and wherein the data store (540) comprises:
a group identifier table storing the association between each data PLP identifier and a group identifier; and
a common PLP table storing an association between each group identifier and, in the case that the group of physical layer pipes represented by the group identifier comprises a common physical layer pipe, the common PLP identifier of the common physical layer pipe; wherein
the demodulator circuitry (500, 103) is operable to obtain the group identifier corresponding to the selected data physical layer pipe by referring to the group identifier table, and to determine whether there is a common physical layer pipe corresponding to the selected data physical layer pipe by referring to the common PLP table, and if so to obtain the common PLP identifier of the common physical layer pipe from the common PLP table.

5. A broadcast receiver according to claim 3 or claim 4, wherein
the interface (525) comprises an address map having a set of memory locations each having a unique address; and
the host circuitry (600) is operable to control the communication of data from the demodulator to the host circuitry via the interface by reading from a memory location within the address map, and is operable to control the communication of data from the host circuit to the demodulator circuit (500, 103) by writing to a memory location within the address map.

6. A broadcast receiver according to claim 5, wherein the address map comprises:
a first memory location storing a number of data physical layer pipes carried by the broadcast signal, the first memory location being readable by the host circuitry;
a second memory location storing a data PLP index for obtaining a data PLP identifier, the second memory location being writeable by the host circuitry;
a third memory location storing the data PLP identifier corresponding to the data PLP index written into the second memory location by the host circuitry, the third memory location being readable by the host circuitry; and
a fourth memory location storing the data PLP identifier of the data physical layer pipe selected by the host circuitry, the fourth memory location being writeable by the host circuitry.

7. A broadcast receiver according to claim 6, wherein the data store (540) comprises a data PLP table storing an association between sequential data physical layer pipe indices and data PLP identifiers, and wherein
the identification extraction circuitry is operable to sequentially populate the data PLP table with the data PLP identifiers indicated by the control signalling to be present in the broadcast signal; and
the host circuitry is operable
to obtain an indication of the number N of received data physical layer pipes by reading the first memory location of the address map; and
to obtain the data PLP identifiers stored in the data PLP table by sequentially writing N data physical layer pipe indices to the second memory location of the address map and reading the resultant N data PLP identifiers from the third memory location.

8. A broadcast receiver according to any preceding claim, wherein the demodulator circuitry (500, 103) comprises payload discrimination circuitry operable to detect a payload type of each of the data physical layer pipes and to determine whether the detected payload type is supported by the demodulator circuitry, and wherein
the demodulator circuitry (500, 103) is operable to communicate an extracted identification of a data physical layer pipe to the host circuitry only if that data physical layer pipe is determined by the payload discrimination circuitry (500, 103) as having a payload type supported by the demodulator circuitry (500, 103).

9. A broadcast receiver according to any preceding claim, wherein the extraction circuitry is operable in the absence of a selection signal to extract a default data physical layer pipe and any associated common physical layer pipe from the broadcast signal and to obtain from the extracted default data physical layer pipe and the associated extracted common physical layer pipe a data stream corresponding to the default data physical layer pipe.

10. A broadcast receiver according to any preceding claim, wherein the host circuitry (600) comprises decompression and/or decoding circuitry for decompressing and/or decoding the data stream output by the demodulator circuitry (500, 103).

11. A broadcast receiver according to any preceding claim, wherein the data streams carried by the broadcast signal comprise one or more of a video transport stream, an audio transport stream and an electronic program guide.

12. A broadcast receiver according to any preceding claim, wherein the broadcast signal is in accordance with the DVB-T2 standard and the physical layer pipes are time interleaved within the broadcast signal.

13. A broadcast system comprising:
a broadcast transmitter for generating and transmitting a broadcast signal carrying a plurality of data streams on a respective plurality of data physical layer pipes and one or more common physical layer pipes, each of the data physical layer pipes carrying at least a unique portion of its respective data stream, and each of the one or more common physical layer pipes carrying a common portion of two or more of the plurality of data streams; and
one or more broadcast receivers according to any preceding claim.

14. A method of receiving a broadcast signal carrying a plurality of data streams on a respective plurality of data physical layer pipes and one or more common physical layer pipes, each of the data physical layer pipes carrying at least a unique portion of a corresponding one of the data streams, and each of the one or more common physical layer pipes carrying a common portion of two or more of the plurality of data streams, comprising the steps of:
identifying, at demodulator circuitry, each of the data physical layer pipes and one or more common physical layer pipes present in the broadcast signal;
determining, at the demodulator circuitry, an association between the one or more common physical layer pipes and the data physical layer pipes;
storing the determined association between the common physical layer pipes and the data physical layer pipes into a data store;
communicating an identification of each of the data physical layer pipes present in the broadcast signal to host circuitry via an interface;
communicating an identification of a selected data physical layer pipe which carries one of the plurality of data streams from the host circuitry to the demodulator circuit via the interface;
determining, at the demodulator circuitry, from the identification of the selected data physical layer pipe and the stored association between the data physical layer pipes and the one or more common physical layer pipes, a common physical layer pipe associated with the selected data physical layer pipe;
extracting, from the broadcast signal, the selected data physical layer pipe and the determined associated common physical layer pipe; and
combining the extracted data physical layer pipe and common physical layer pipe to obtain the one of the plurality of data streams for output to the host circuitry (600) for decompression and decoding.

15. A television for receiving a television signal and for generating video images representative of the television signal, the television including a broadcast receiver as claimed in any of claims 1 to 12.

## Patentansprüche

1. Rundfunkempfänger, umfassend eine Demodulatorschaltung (500, 103), eine Host- (600) Schaltung, und eine zwischen der Demodulatorschaltung (500, 103) und der Host-Schaltung (600) gebildete Schnittstelle (525),
wobei die Demodulatorschaltung (500, 103) eingerichtet ist, im Betrieb, zum
Empfangen eines Rundfunksignals, das mehrere Datenströme auf entsprechenden mehreren Datenleitungen der physikalischen Schicht und einer oder mehreren gemeinsamen Leitungen der physikalischen Schicht trägt, wobei jede der Datenleitungen der physikalischen Schicht mindestens einen eindeutigen Teil eines entsprechenden der Datenströme trägt, und die eine oder die mehreren gemeinsamen Leitungen der physikalischen Schicht einen gemeinsamen Teil von zwei oder mehr der mehreren Datenströme tragen;
Identifizieren jeder der Datenleitungen der physikalischen Schicht und der einen oder der mehreren gemeinsamen Leitungen der physikalischen Schicht, die in dem Rundfunksignal vorhanden sind, und Bestimmen einer Zuordnung zwischen der einen oder den mehreren gemeinsamen Leitungen der physikalischen Schicht und den Datenleitungen der physikalischen Schicht;
Speichern der bestimmten Zuordnung zwischen den gemeinsamen Leitungen der physikalischen Schicht und den Datenleitungen der physikalischen Schicht in einem Datenspeicher (530); und
Kommunizieren einer Identifikation jeder der Datenleitungen der physikalischen Schicht, die in dem Rundfunksignal vorhanden sind, an die Host-Schaltung, über die Schnittstelle (525); wobei die Host-Schaltung (600) eingerichtet ist, im Betrieb, über die Schnittstelle an die Demodulatorschaltung (500, 103) eine Identifikation einer ausgewählten Datenleitung der physikalischen Schicht, die einen der mehreren Datenströmen trägt, zu kommunizieren, wobei die Demodulatorschaltung (500, 103) eingerichtet ist, im Betrieb, zum
Bestimmen, aus der gespeicherten Zuordnung zwischen den Datenleitungen der physikalischen Schicht und der einen oder den mehreren gemeinsamen Leitungen der physikalischen Schicht, einer gemeinsamen Leitung der physikalischen Schicht, die der ausgewählten Datenleitung der physikalischen Schicht zugeordnet ist;
Extrahieren, aus dem Rundfunksignal, der ausgewählten Datenleitung der physikalischen Schicht und der bestimmten zugeordneten gemeinsamen Leitung der physikalischen Schicht; und
Kombinieren der extrahierten Datenleitung der physikalischen Schicht und der gemeinsamen Leitung der physikalischen Schicht, um den einen der mehreren Datenströme zur Ausgabe an die Host-Schaltung (600), zur Dekomprimierung und Decodierung, zu erhalten.

2. Rundfunkempfänger nach Anspruch 1, wobei die Host-Schaltung (600) einen Dienstspeicher (630) umfasst, der eine Zuordnung zwischen verfügbaren Diensten und Datenleitungen der physikalischen Schicht, die diese verfügbaren Dienste tragen, speichert, wobei die Host-Schaltung (600) auf eine Benutzereingabe, die einen der in dem Dienstspeicher gespeicherten Dienste auswählt, anspricht, um eine Identifikation der Datenleitung der physikalischen Schicht, die dem ausgewählten Dienst zugeordnet ist, über die Schnittstelle (525) an die Demodulatorschaltung (500, 103) zu kommunizieren, und die Demodulatorschaltung (500, 103) betreibbar ist, einen Datenstrom zu erhalten, der dem ausgewählten Dienst entspricht, durch Bestimmen einer gemeinsamen Leitung der physikalischen Schicht, die der von der Host-Schaltung identifizierten Datenleitung der physikalischen Schicht zugeordnet ist, die identifizierte Datenleitung der physikalischen Schicht und die bestimmte zugeordnete gemeinsame Leitung der physikalische Schicht zu extrahieren, und die extrahierte Datenleitung der physikalischen Schicht und die gemeinsame Leitung der physikalischen Schicht zu dem Datenstrom zu kombinieren, der dem ausgewählten Dienst entspricht.

3. Rundfunkempfänger nach Anspruch 1 oder Anspruch 2, wobei
das Rundfunksignal eine Steuersignalisierung umfasst, die jede der Datenleitungen der physikalischen Schicht und der einen oder der mehreren gemeinsamen Leitungen der physikalischen Schicht identifiziert und eine Zuordnung zwischen den Datenleitungen der physikalischen Schicht und der einen oder den mehreren gemeinsamen Leitungen der physikalischen Schicht anzeigt;
die Demodulatorschaltung (500, 103) eine Identifikations-Extraktionsschaltung umfasst, die betreibbar ist
zum Extrahieren, aus der Steuerungssignalisierung des Rundfunksignals, einer Daten-PLP- ("Physical Layer Pipe", Leitung der physikalischen Schicht) Kennung für jede der Datenleitungen der physikalischen Schicht, einer gemeinsamen PLP-Kennung für jede der einen oder der mehreren gemeinsamen Leitungen der physikalischen Schicht, und einer Zuordnung zwischen den Daten-PLP-Kennungen und den gemeinsamen PLP-Kennungen;
zum Speichern der extrahierten Zuordnung zwischen den Daten-PLP-Kennungen und den gemeinsamen PLP-Kennungen in einem Datenspeicher (530); und
zum Kommunizieren der extrahierten Daten-PLP-Kennungen über die Schnittstelle (525) an die Host-Schaltung (600);
die Host-Schaltung (600) betreibbar ist, die Daten-PLP-Kennung, die der ausgewählten Datenleitung der physikalischen Schicht entspricht, an die Demodulatorschaltung zu kommunizieren; und
die Demodulatorschaltung (500, 103) betreibbar ist, wenn die ausgewählte Datenleitung der physikalischen Schicht eine zugeordnete gemeinsame Leitung der physikalischen Schicht aufweist, die gemeinsame PLP-Kennung der zugeordneten gemeinsamen Leitung der physikalischen Schicht aus der gespeicherten Zuordnung zwischen den Daten-PLP-Kennungen und den gemeinsamen PLP-Kennungen zu bestimmen, und die ausgewählte Datenleitung der physikalischen Schicht und die zugeordnete gemeinsame Leitung der physikalischen Schicht basierend auf deren jeweiligen PLP-Kennungen zu extrahieren.

4. Rundfunkempfänger nach Anspruch 3, wobei die Zuordnung zwischen den Datenleitungen der physikalischen Schicht und der ein oder den mehreren gemeinsamen Leitungen der physikalischen Schicht in der Steuersignalisierung durch eine Gruppenkennung angezeigt wird, und wobei der Datenspeicher (540) umfasst:
eine Gruppenkennungstabelle, die die Zuordnung zwischen jeder Daten-PLP-Kennung und einer Gruppenkennung speichert; und
eine gemeinsame PLP-Tabelle, die eine Zuordnung zwischen jeder Gruppenkennung, und, in dem Fall, dass die Gruppe von Leitungen der physikalischen Schicht, die durch die Gruppenkennung repräsentiert werden, eine gemeinsame Leitung der physikalischen Schicht umfasst, die gemeinsame PLP-Kennung der gemeinsamen Leitung der physikalischen Schicht speichert; wobei
die Demodulatorschaltung (500, 103) betreibbar ist, die Gruppenkennung, die der ausgewählten Datenleitung der physikalischen Schicht entspricht, durch Bezugnahme auf die Gruppenkennungstabelle zu erhalten, und zu bestimmen, ob eine gemeinsame Leitung der physikalischen Schicht vorhanden ist, die der ausgewählten Datenleitung der physikalischen Schicht entspricht, durch Bezugnahme auf die gemeinsame PLP-Tabelle, und wenn ja, die gemeinsame PLP-Kennung der gemeinsamen Leitung der physikalischen Schicht aus der gemeinsamen PLP-Tabelle zu erhalten.

5. Rundfunkempfänger nach Anspruch 3 oder Anspruch 4, wobei
die Schnittstelle (525) eine Adresskarte mit einem Satz von Speicherorten, die jeweils eine eindeutige Adresse aufweisen, umfasst; und
die Host-Schaltung (600) betreibbar ist, die Kommunikation von Daten von dem Demodulator an die Host-Schaltung über die Schnittstelle durch Auslesen eines Speicherorts in der Adresskarte zu steuern, und betreibbar ist, die Kommunikation von Daten von der Host-Schaltung an die Demodulatorschaltung (500, 103) durch Schreiben in einen Speicherort in der Adresskarte zu steuern.

6. Rundfunkempfänger nach Anspruch 5, wobei die Adresskarte umfasst:
einen ersten Speicherort, der eine Anzahl von Datenleitungen der physikalischen Schicht, die von dem Rundfunksignal getragen werden, speichert, wobei der erste Speicherort von der Host-Schaltung lesbar ist;
einen zweiten Speicherort, der einen Daten-PLP-Index speichert, um eine Daten-PLP-Kennung zu erhalten, wobei der zweite Speicherort durch die Host-Schaltung beschreibbar ist;
einen dritten Speicherort, der die Daten-PLP-Kennung, die dem Daten-PLP-Index entspricht, der von der Host-Schaltung in den zweiten Speicherort geschrieben wurde, speichert, wobei der dritte Speicherort durch die Host-Schaltung lesbar ist; und
einen vierten Speicherort, der die Daten-PLP-Kennung der Datenleitung der physikalischen Schicht, die durch die Host-Schaltung ausgewählt wurde, speichert, wobei der vierte Speicherort durch die Host-Schaltung beschreibbar ist.

7. Rundfunkempfänger nach Anspruch 6, wobei der Datenspeicher (540) eine Daten-PLP-Tabelle umfasst, die eine Zuordnung zwischen sequentiellen Indizes der Datenleitungen der physikalischen Schicht und Daten-PLP-Kennungen speichert, und wobei
die Identifikations-Extraktionsschaltung betreibbar ist, die Daten-PLP-Tabelle sequentiell mit den angegebenen Daten-PLP-Kennungen zu füllen, die durch die Steuersignalisierung als in dem Rundfunksignal vorhanden angezeigt werden; und
die Host-Schaltung betreibbar ist
zum Erhalten einer Anzeige der Anzahl N von empfangenen Datenleitungen der physikalischen Schicht durch Auslesen des ersten Speicherorts der Adresskarte; und
zum Erhalten der Daten-PLP-Kennungen, die in der Daten-PLP-Tabelle gespeichert sind, durch sequentielles Schreiben von N Indizes der Datenleitungen der physikalischen Schicht in den zweiten Speicherort der Adresskarte und Auslesen der resultierenden N Daten-PLP-Kennungen aus dem dritten Speicherort.

8. Rundfunkempfänger nach einem der vorhergehenden Ansprüche, wobei die Demodulatorschaltung (500, 103) eine Nutzlast-Unterscheidungsschaltung umfasst, die betreibbar ist, einen Nutzlasttyp jeder der Datenleitungen der physikalischen Schicht zu erkennen und zu bestimmen, ob der erkannte Nutzlasttyp durch die Demodulatorschaltung unterstützt wird, und wobei
die Demodulatorschaltung (500, 103) betreibbar ist, eine extrahierte Identifikation einer Datenleitung der physikalischen Schichtleitung nur dann an die Host-Schaltung zu kommunizieren, wenn diese Datenleitung der physikalischen Schicht von der Nutzlast-Unterscheidungsschaltung (500, 103) als einen Nutzlasttyp aufzuweisend bestimmt wird, der durch die Demodulatorschaltung (500, 103) unterstützt wird.

9. Rundfunkempfänger nach einem der vorhergehenden Ansprüche, wobei die Extraktionsschaltung betreibbar ist, in Abwesenheit eines Auswahlsignals eine vorgegebene Datenleitung der physikalischen Schicht und eine beliebige zugeordnete gemeinsame Leitung der physikalischen Schicht aus dem Rundfunksignal zu extrahieren, und aus der extrahierten vorgegebenen Datenleitung der physikalischen Schicht und der zugeordneten extrahierten gemeinsamen Leitung der physikalischen Schicht einen Datenstrom zu erhalten, der der vorgegebenen Datenleitung der physikalischen Schicht entspricht.

10. Rundfunkempfänger nach einem der vorhergehenden Ansprüche, wobei die Host-Schaltung (600) eine Dekompressions- und/oder Decodierschaltung zum Dekomprimieren und/oder Decodieren des von der Demodulatorschaltung (500, 103) ausgegebenen Datenstroms umfasst.

11. Rundfunkempfänger nach einem der vorhergehenden Ansprüche, wobei die von dem Rundfunksignal getragenen Datenströme einen oder mehrere von einem Video-Transportstrom, einem Audio-Transportstrom und einer elektronischen Programmübersicht umfassen.

12. Rundfunkempfänger nach einem der vorhergehenden Ansprüche, wobei das Rundfunksignal in Übereinstimmung mit dem DVB-T2-Standard ist und die Leitungen der physikalischen Schicht in dem Rundfunksignal zeitverschachtelt sind.

13. Rundfunksystem, umfassend:
einen Rundfunksender zum Erzeugen und Senden eines Rundfunksignals, das mehrere Datenströme auf entsprechenden mehreren Datenleitungen der physikalischen Schicht und einer oder mehreren gemeinsamen Leitungen der physikalischen Schicht trägt, wobei jede der Datenleitungen der physikalischen Schicht mindestens einen eindeutigen Teil ihres jeweiligen Datenstroms trägt, und jede der einen oder mehreren gemeinsamen Leitungen der physikalischen Schicht einen gemeinsamen Teil von zwei oder mehr der mehreren Datenströmen trägt; und
einen oder mehrere Rundfunkempfänger nach einem der vorhergehenden Ansprüche.

14. Verfahren zum Empfangen eines Rundfunksignals, das mehrere Datenströme auf entsprechenden mehreren Datenleitungen der physikalischen Schicht und einer oder mehreren gemeinsamen Leitungen der physikalischen Schicht trägt, wobei jede der Datenleitungen der physikalischen Schicht mindestens einen eindeutigen Teil eines entsprechenden Teils der Datenströme trägt und jede der einen oder der mehreren gemeinsamen Leitungen der physikalischen Schicht einen gemeinsamen Teil von zwei oder mehr der mehreren Datenströmen trägt, umfassend die Schritte:
Identifizieren, mit einer Demodulatorschaltung, jeder der Datenleitungen der physikalischen Schicht und der einen oder der mehreren gemeinsamen Leitungen der physikalischen Schicht, die in dem Rundfunksignal vorhanden sind;
Bestimmen, mit der Demodulatorschaltung, einer Zuordnung zwischen der einen oder den mehreren gemeinsamen Leitungen der physikalischen Schicht und den Datenleitungen der physikalischen Schicht;
Speichern der bestimmten Zuordnung zwischen den gemeinsamen Leitungen der physikalischen Schicht und den Datenleitungen der physikalischen Schicht in einem Datenspeicher;
Kommunizieren einer Identifikation jeder der Datenleitungen der physikalischen Schicht, die in dem Rundfunksignal vorhanden sind, über eine Schnittstelle an eine Host-Schaltung;
Kommunizieren einer Identifikation einer ausgewählten Datenleitung der physikalischen Schicht, die einen der mehreren Datenströmen über die Schnittstelle von der Host-Schaltung zu der Demodulatorschaltung trägt;
Bestimmen, mit der Demodulatorschaltung, aus der Identifikation der ausgewählten Datenleitung der physikalischen Schicht und der gespeicherten Zuordnung zwischen den Datenleitungen der physikalischen Schicht und der einen oder den mehreren gemeinsamen Leitungen der physikalischen Schicht, einer gemeinsamen Leitung der physikalischen Schicht, die der ausgewählten Datenleitung der physikalischen Schicht zugeordnet ist;
Extrahieren, aus dem Rundfunksignal, der ausgewählten Datenleitung der physikalischen Schicht und der bestimmten zugeordneten gemeinsamen Leitung der physikalischen Schicht; und
Kombinieren der extrahierten Datenleitung der physikalischen Schicht und der gemeinsamen Leitung der physikalischen Schicht, um den einen der mehreren Datenströme zur Ausgabe an die Host-Schaltung (600), zur Dekomprimierung und Decodierung, zu erhalten.

15. Fernsehgerät zum Empfangen eines Fernsehsignals und zum Erzeugen von Videobildern, die das Fernsehsignal darstellen, wobei das Fernsehgerät einen Rundfunkempfänger nach einem der Ansprüche 1 bis 12 aufweist.

## Revendications

1. Récepteur de radiodiffusion, comprenant une circuiterie de démodulateur (500, 103), une circuiterie hôte (600) et une interface (525) formée entre la circuiterie de démodulateur (500, 103) et la circuiterie hôte (600),
la circuiterie de démodulateur (500, 103) étant conçue en fonctionnement
pour recevoir un signal de radiodiffusion portant une pluralité de flux de données sur une pluralité respective de tuyaux de couche physique de données et un ou plusieurs tuyaux de couche physique communs, chacun des tuyaux de couche physique de données portant au moins une portion unique d'un flux correspondant des flux de données, et les un ou plusieurs tuyaux de couche physique communs portant une portion commune de deux ou plus de la pluralité de flux de données ;
pour identifier chacun des tuyaux de couche physique de données et les un ou plusieurs tuyaux de couche physique communs présents dans le signal de radiodiffusion et pour déterminer une association entre les un ou plusieurs tuyaux de couche physique communs et les tuyaux de couche physique de données ;
pour stocker l'association déterminée entre les tuyaux de couche physique communs et les tuyaux de couche physique de données dans un dispositif de stockage de données (530) ; et
pour communiquer une identification de chacun des tuyaux de couche physique de données présents dans le signal de radiodiffusion à la circuiterie hôte via l'interface (525) ; la circuiterie hôte (600) étant conçue en fonctionnement pour communiquer, à la circuiterie de démodulateur (500, 103) via l'interface, une identification d'un tuyau de couche physique de données sélectionné qui porte l'un de la pluralité de flux de données, dans lequel la circuiterie de démodulateur (500, 103) est conçue en fonctionnement
pour déterminer, à partir de l'association stockée entre les tuyaux de couche physique de données et les un ou plusieurs tuyaux de couche physique communs, un tuyau de couche physique commun associé au tuyau de couche physique de données sélectionné ;
pour extraire, du signal de radiodiffusion, le tuyau de couche physique de données sélectionné et le tuyau de couche physique commun associé déterminé ; et
pour combiner le tuyau de couche physique de données et le tuyau de couche physique commun extraits afin d'obtenir l'un de la pluralité de flux de données à fournir en sortie à la circuiterie hôte (600) en vue d'une décompression et d'un décodage.

2. Récepteur de radiodiffusion selon la revendication 1, dans lequel la circuiterie hôte (600) comprend un dispositif de stockage de services (630) qui stocke une association entre des services disponibles et des tuyaux de couche physique de données portant ces services disponibles, la circuiterie hôte (600) étant sensible à une entrée utilisateur sélectionnant l'un des services stockés dans le dispositif de stockage de services pour communiquer une identification du tuyau de couche physique de données associé au service sélectionné au circuit de démodulateur (500, 103) via l'interface (525), et le circuit de démodulateur (500, 103) est opérationnel pour obtenir un flux de données correspondant au service sélectionné en déterminant un tuyau de couche physique commun associé au tuyau de couche physique de données identifié par la circuiterie hôte, en extrayant le tuyau de couche physique de données identifié et le tuyau de couche physique commun associé déterminé, et en combinant le tuyau de couche physique de données et le tuyau de couche physique commun extraits pour le flux de données correspondant au service sélectionné.

3. Récepteur de radiodiffusion selon la revendication 1 ou la revendication 2, dans lequel
le signal de radiodiffusion comprend une signalisation de commande identifiant chacun des tuyaux de couche physique de données et les un ou plusieurs tuyaux de couche physique communs et indiquant une association entre les tuyaux de couche physique de données et les un ou plusieurs tuyaux de couche physique communs ;
la circuiterie de démodulateur (500, 103) comprend une circuiterie d'extraction d'identification, opérationnelle
pour extraire, à partir de la signalisation de commande du signal de radiodiffusion, un identifiant PLP de données pour chacun des tuyaux de couche physique de données, un identifiant PLP commun pour chacun des un ou plusieurs tuyaux de couche physique communs, et une association entre les identifiants PLP de données et les identifiants PLP communs ;
pour stocker l'association extraite entre les identifiants PLP de données et les identifiants PLP communs dans un dispositif de stockage de données (530) ; et
pour communiquer les identifiants PLP de données extraits à la circuiterie hôte (600) via l'interface (525) ;
la circuiterie hôte (600) est opérationnelle pour communiquer l'identifiant PLP de données correspondant au tuyau de couche physique de données sélectionné à la circuiterie de démodulateur ; et
la circuiterie de démodulateur (500, 103) est opérationnelle, si le tuyau de couche physique de données sélectionné a un tuyau de couche physique commun associé, pour déterminer l'identifiant PLP commun du tuyau de couche physique commun associé à partir de l'association stockée entre les identifiants PLP de données et les identifiants PLP communs, et pour extraire le tuyau de couche physique de données sélectionné et le tuyau de couche physique commun associé d'après leurs identifiants PLP respectifs.

4. Récepteur de radiodiffusion selon la revendication 3, dans lequel l'association entre les tuyaux de couche physique de données et les un ou plusieurs tuyaux de couche physique communs est indiquée dans la signalisation de commande par un identifiant de groupe, et dans lequel le dispositif de stockage de données (540) comprend :
une table d'identifiants de groupe stockant l'association entre chaque identifiant PLP de données et un identifiant de groupe ; et
une table PLP commune stockant une association entre chaque identifiant de groupe et, dans le cas où le groupe de tuyaux de couche physique représenté par l'identifiant de groupe comprend un tuyau de couche physique commun, l'identifiant PLP commun du tuyau de couche physique commun ; dans lequel
la circuiterie de démodulateur (500, 103) est opérationnelle pour obtenir l'identifiant de groupe correspondant au tuyau de couche physique de données sélectionné en consultant la table d'identifiants de groupe, et pour déterminer s'il existe un tuyau de couche physique commun correspondant au tuyau de couche physique de données sélectionné en consultant la table PLP commune, et si c'est le cas, pour obtenir l'identifiant PLP commun du tuyau de couche physique commun à partir de la table PLP commune.

5. Récepteur de radiodiffusion selon la revendication 3 ou la revendication 4, dans lequel
l'interface (525) comprend une carte d'adresse ayant un ensemble d'emplacements de mémoire ayant chacun une adresse unique ; et
la circuiterie hôte (600) est opérationnelle pour commander la communication de données du démodulateur à la circuiterie hôte via l'interface en lisant depuis un emplacement de mémoire au sein de la carte d'adresse, et est opérationnelle pour commander la communication de données du circuit hôte au circuit de démodulateur (500, 103) en écrivant dans un emplacement de mémoire au sein de la carte d'adresse.

6. Récepteur de radiodiffusion selon la revendication 5, dans lequel la carte d'adresse comprend :
un premier emplacement de mémoire stockant un nombre de tuyaux de couche physique de données portés par le signal de radiodiffusion, le premier emplacement de mémoire étant lisible par la circuiterie hôte ;
un deuxième emplacement de mémoire stockant un index PLP de données pour obtenir un identifiant PLP de données, le deuxième emplacement de mémoire étant inscriptible par la circuiterie hôte ;
un troisième emplacement de mémoire stockant l'identifiant PLP de données correspondant à l'index PLP de données écrit dans le deuxième emplacement de mémoire par la circuiterie hôte, le troisième emplacement de mémoire étant lisible par la circuiterie hôte ; et
un quatrième emplacement de mémoire stockant l'index PLP de données du tuyau de couche physique de données sélectionné par la circuiterie hôte, le quatrième emplacement de mémoire étant inscriptible par la circuiterie hôte.

7. Récepteur de radiodiffusion selon la revendication 6, dans lequel le dispositif de stockage de données (540) comprend une table PLP de données stockant une association entre des index de tuyau de couche physique de données séquentiels et des identifiants PLP de données, et dans lequel
la circuiterie d'extraction d'identification est opérationnelle pour remplir séquentiellement la table PLP de données avec les identifiants PLP de données indiqués par la signalisation de commande comme étant présents dans le signal de radiodiffusion ; et
la circuiterie hôte est opérationnelle
pour obtenir une indication du nombre N de tuyaux de couche physique de données reçus en lisant le premier emplacement de mémoire de la carte d'adresse ; et
pour obtenir les identifiants PLP de données stockés dans la table PLP de données en écrivant séquentiellement N index de tuyau de couche physique de données dans le deuxième emplacement de mémoire de la carte d'adresse et en lisant les N identifiants PLP de données résultants à partir du troisième emplacement de mémoire.

8. Récepteur de radiodiffusion selon l'une quelconque des revendications précédentes, dans lequel la circuiterie de démodulateur (500, 103) comprend une circuiterie de discrimination de charge utile opérationnelle pour détecter un type de charge utile de chacun des tuyaux de couche physique de données et pour déterminer si le type de charge utile détecté est pris en charge par la circuiterie de démodulateur, et dans lequel
la circuiterie de démodulateur (500, 103) est opérationnelle pour communiquer une identification extraite d'un tuyau de couche physique de données à la circuiterie hôte uniquement si ce tuyau de couche physique de données est déterminé par la circuiterie de discrimination de charge utile (500, 103) comme ayant un type de charge utile pris en charge par la circuiterie de démodulateur (500, 103).

9. Récepteur de radiodiffusion selon l'une quelconque des revendications précédentes, dans lequel la circuiterie d'extraction est opérationnelle, en l'absence d'un signal de sélection, pour extraire un tuyau de couche physique de données par défaut et tout tuyau de couche physique commun associé à partir du signal de radiodiffusion et pour obtenir à partir du tuyau de couche physique de données par défaut extrait et du tuyau de couche physique commun extrait associé un flux de données correspondant au tuyau de couche physique de données par défaut.

10. Récepteur de radiodiffusion selon l'une quelconque des revendications précédentes, dans lequel la circuiterie hôte (600) comprend une circuiterie de décompression et/ou de décodage pour décompresser et/ou décoder le flux de données fourni en sortie par la circuiterie de démodulateur (500, 103).

11. Récepteur de radiodiffusion selon l'une quelconque des revendications précédentes, dans lequel les flux de données portés par le signal de radiodiffusion comprennent un ou plusieurs parmi un flux de transport vidéo, un flux de transport audio et un guide de programme électronique.

12. Récepteur de radiodiffusion selon l'une quelconque des revendications précédentes, dans lequel le signal de radiodiffusion est conforme à la norme DVB-T2 et les tuyaux de couche physique sont entrelacés temporellement au sein du signal de radiodiffusion.

13. Système de radiodiffusion comprenant :
un émetteur de radiodiffusion pour générer et émettre un signal de radiodiffusion portant une pluralité de flux de données sur une pluralité respective de tuyaux de couche physique de données et un ou plusieurs tuyaux de couche physique communs, chacun des tuyaux de couche physique de données portant au moins une portion unique de son flux de données respectif, et chacun des un ou plusieurs tuyaux de couche physique communs portant une portion commune de deux ou plus de la pluralité de flux de données ; et
un ou plusieurs récepteurs de radiodiffusion selon l'une quelconque des revendications précédentes.

14. Procédé de réception d'un signal de radiodiffusion portant une pluralité de flux de données sur une pluralité respective de tuyaux de couche physique de données et un ou plusieurs tuyaux de couche physique communs, chacun des tuyaux de couche physique de données portant au moins une portion unique d'un flux correspondant des flux de données, et chacun des un ou plusieurs tuyaux de couche physique communs portant une portion commune de deux ou plus de la pluralité de flux de données, comprenant les étapes :
d'identification, au niveau de la circuiterie de démodulateur, de chacun des tuyaux de couche physique de données et d'un ou de plusieurs tuyaux de couche physique communs présents dans le signal de radiodiffusion ;
de détermination, au niveau de la circuiterie de démodulateur, d'une association entre les un ou plusieurs tuyaux de couche physique communs et les tuyaux de couche physique de données ;
de stockage de l'association déterminée entre les tuyaux de couche physique communs et les tuyaux de couche physique de données dans un dispositif de stockage de données ;
de communication d'une identification de chacun des tuyaux de couche physique de données présents dans le signal de radiodiffusion à une circuiterie hôte via une interface ;
de communication d'une identification d'un tuyau de couche physique de données sélectionné qui porte l'un de la pluralité de flux de données de la circuiterie hôte au circuit de démodulateur via l'interface ;
de détermination, au niveau de la circuiterie de démodulateur, à partir de l'identification du tuyau de couche physique de données sélectionné et de l'association stockée entre les tuyaux de couche physique de données et les un ou plusieurs tuyaux de couche physique communs, d'un tuyau de couche physique commun associé au tuyau de couche physique de données sélectionné ;
d'extraction, à partir du signal de radiodiffusion, du tuyau de couche physique de données sélectionné et du tuyau de couche physique commun associé déterminé ; et
de combinaison du tuyau de couche physique de données et du tuyau de couche physique commun extraits pour obtenir l'un de la pluralité de flux de données à fournir en sortie à la circuiterie hôte (600) en vue d'une décompression et d'un décodage.

15. Télévision pour recevoir un signal de télévision et pour générer des images vidéo représentatives du signal de télévision, la télévision comportant un récepteur de radiodiffusion tel que revendiqué dans l'une quelconque des revendications 1 à 12.
